(19) **Europäisches Patentamt / European Patent Office / Office européen des brevets**

(11) **EP 4 757 128 A1**

(12) **EUROPEAN PATENT APPLICATION**
published in accordance with Art. 153(4) EPC

(43) Date of publication:
**10.06.2026 Bulletin 2026/24**

(21) Application number: **24849185.4**

(22) Date of filing: **30.07.2024**

(51) International Patent Classification (IPC):
**H02K 3/04** (2006.01)   **H02K 3/28** (2006.01)

(52) Cooperative Patent Classification (CPC):
**H02K 3/04; H02K 3/28**

(86) International application number:
**PCT/JP2024/027218**

(87) International publication number:
**WO 2025/028540 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.07.2023  JP 2023124989**

(71) Applicant: NHK Spring Co., Ltd.
**Kanagawa 236-0004 (JP)**

(72) Inventors:
• **YODA, Yu**
  **Yokohama-shi, Kanagawa 236-0004 (JP)**
• **YAMAMOTO, Tatsuki**
  **Yokohama-shi, Kanagawa 236-0004 (JP)**
• **MINAMIKAWA, Hiroshi**
  **Yokohama-shi, Kanagawa 236-0004 (JP)**

(74) Representative: **DREISS Patentanwälte PartG mbB**
**Friedrichstraße 6**
**70174 Stuttgart (DE)**

(54) **STATOR FOR ROTARY ELECTRICAL MACHINE**

(57)    A stator for a rotating electrical machine including: a stator core having a plurality of slots; and a stator coil formed by segment coils, each of which is configured using a flat wire with a rectangular cross section, is inserted into different slots spaced apart from each other in a circumferential direction of the stator core, and has a pair of insertion portions that are inserted into the different slots and an interconnecting portion that interconnects the pair of insertion portions, wherein when Ns denotes a slot pitch, which is the pitch of the slots into which the pair of the insertion portions of each of the segment coils are inserted, and S denotes the total number of slots in the stator core, the following relational expression (1) is satisfied.

$$Ns < S/4 \cdots (1)$$

FIG.5

**EP 4 757 128 A1**

## Description

### TECHNICAL FIELD

This disclosure relates to a stator for a rotating electrical machine.

### BACKGROUND ART

In recent years, rotating electrical machines for driving vehicles have become increasingly more compact and more powerful, and there are rotating electrical machines in which the stator windings are configured using stator coils comprising flat wires with rectangular cross sections. Patent document 1 mentioned below describes a stator for a rotating electrical machine in which six or more slot conductors are inserted into one slot, wherein the slot pitch of a jumper wire interconnecting round windings having different positions in a radial direction straddles the slots at at least two or more different slot pitches, when N is defined as the number of slots per pole, the different slot pitches of the jumper wire are set to a slot pitch of N + 1 and a slot pitch of (N + 1) ± 1, the stator has a plurality of slot conductor groups each configured by a plurality of winding conductors with the same phase, the plurality of winding conductors that configure each slot conductor group are inserted so that the slots and layers are adjacent to each other in a predetermined number Ns of slots that are continuously arranged in a circumferential direction of the stator core, and when NSPP is defined as the number of slots per pole per phase and 2 × NJ is defined as the number of jumper wires per phase with a slot pitch of (N + 1) ± 1, the predetermined number Ns is set to satisfy the equation "Ns = NSPP + NJ."

### SUMMARY OF INVENTION

#### Technical Problem

In relation to rotating electrical machines such as described in Japanese Patent No. 6513831, rotating electrical machines with various output ranges are being considered. In particular, downsizing stator cores for the purpose of low-output rotating electrical machines is being considered. In this case, if the number of slots in the stator core is reduced, when segment coils are inserted into the slots, the central angle of coil end portions of the segment coils becomes relatively large, and the rigidity of curved portions of the coil end portions is reduced (i.e., they tend to become plastically deformed), so there has been the problem that it is difficult to insert the segment coils via the coil end portions.

The technology of this disclosure provides a stator in which the productivity of a stator coil can be improved even when the number of slots in a stator core using segment coils is reduced.

### Solution to Problem

A first aspect pertaining to the technology of this disclosure is a stator for a rotating electrical machine, the stator including: a stator core having a plurality of slots; and a stator coil formed by segment coils, which are respectively configured using a flat wire with a rectangular cross section and inserted into different slots spaced apart from each other in a circumferential direction of the stator core, and each of which has a pair of insertion portions that are respectively inserted into the different slots and a coupling portion that couples together the pair of insertion portions, in which, when Ns denotes a slot pitch, which is the pitch of the slots into which the pair of the insertion portions of each of the segment coils are inserted, and S denotes the total number of slots in the stator core, the following relational expression (1) is satisfied.

$$(1): Ns < S/4$$

A second aspect pertaining to the technology of this disclosure is the stator for a rotating electrical machine pertaining to the first aspect, in which the slot pitch is the slot pitch in a middle layer between an outermost layer and an innermost layer of the stator core.

A third aspect pertaining to the technology of this disclosure is the stator for a rotating electrical machine pertaining to the first aspect, in which, when P denotes the number of magnetic poles of a rotor that rotates relative to the stator, P ≤ 4.

A fourth aspect pertaining to the technology of this disclosure is the stator for a rotating electrical machine pertaining to the first aspect, in which, in the stator core, the total number of slots S = 24.

### Advantageous Effects of Invention

According to the technology of this disclosure, there is provided a stator in which the productivity of a stator coil can be improved even when the number of slots in a stator core using segment coils is reduced.

### BRIEF DESCRIPTION OF DRAWINGS

FIG. 1A is a perspective view showing a stator for a rotating electrical machine pertaining to an embodiment.
FIG. 1B is a perspective view showing a stator for a rotating electrical machine pertaining to an embodiment.
FIG. 2 is a perspective view showing part of a stator coil and a stator core with which the stator for a rotating electrical machine pertaining to an embodiment is equipped.

FIG. 3 is an enlarged perspective view showing part of the configuration shown in FIG. 2.

FIG. 4 is a conceptual diagram showing an example of stator coil wiring.

FIG. 5 is a drawing showing an example of stator coil wiring pertaining to an embodiment.

FIG. 6 is a drawing showing an example of stator coil wiring pertaining to an embodiment.

FIG. 7 is a drawing showing an example of stator coil wiring pertaining to an embodiment.

DESCRIPTION OF EMBODIMENTS

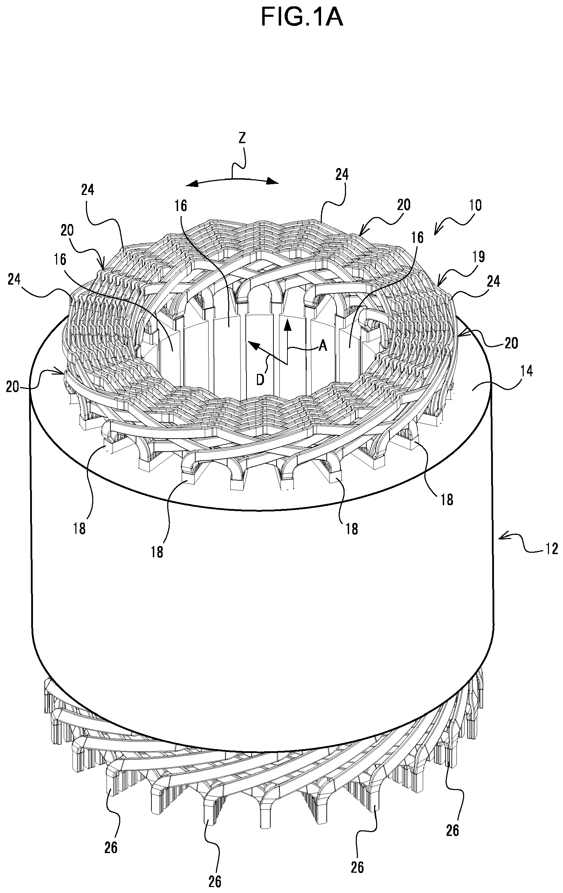

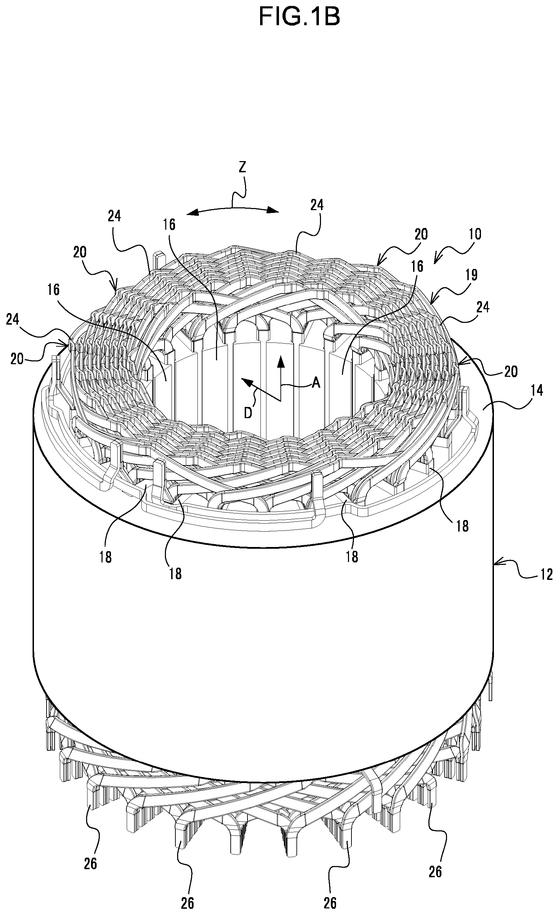

A stator 10 for a rotating electrical machine pertaining to an embodiment (hereinafter, simply called "the stator 10") will be described below with reference to FIG. 1A to FIG. 5. It will be noted that in the drawings some reference signs may be omitted to facilitate viewing of the drawings. As shown in FIG. 1A and FIG. 1B, the stator 10 pertaining to this embodiment includes a stator core 12 and a stator coil 19. The stator 10 configures a three-phase alternating current rotating electrical machine together with a rotor not shown in the drawings, for example. It will be noted that in FIG. 1A and FIG. 1B arrows Z, A, and D indicate a circumferential direction, an axial direction, and a radial direction, respectively, of the stator core 12. Hereinafter, the circumferential direction of the stator core 12 may be simply called "the circumferential direction," the axial direction of the stator core 12 may be simply called "the axial direction," and the radial direction of the stator core 12 may be simply called "the radial direction."

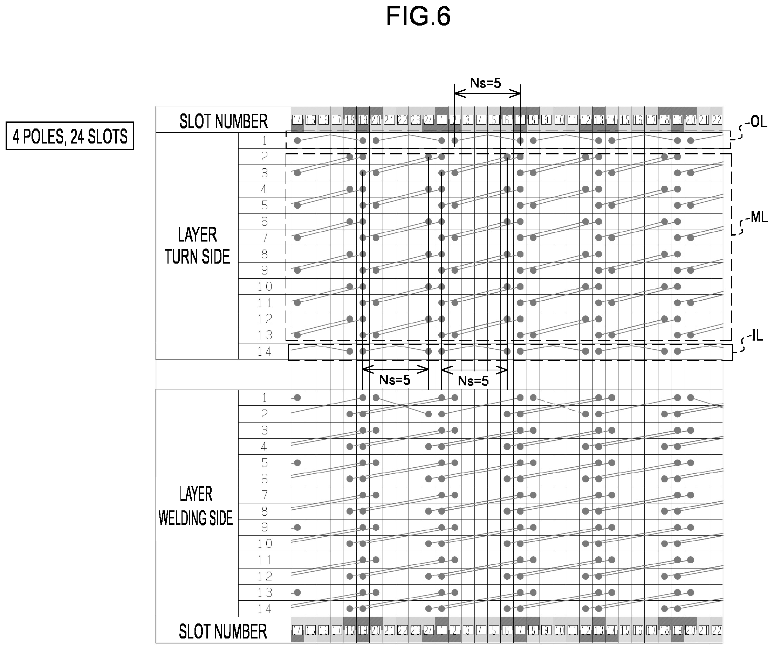

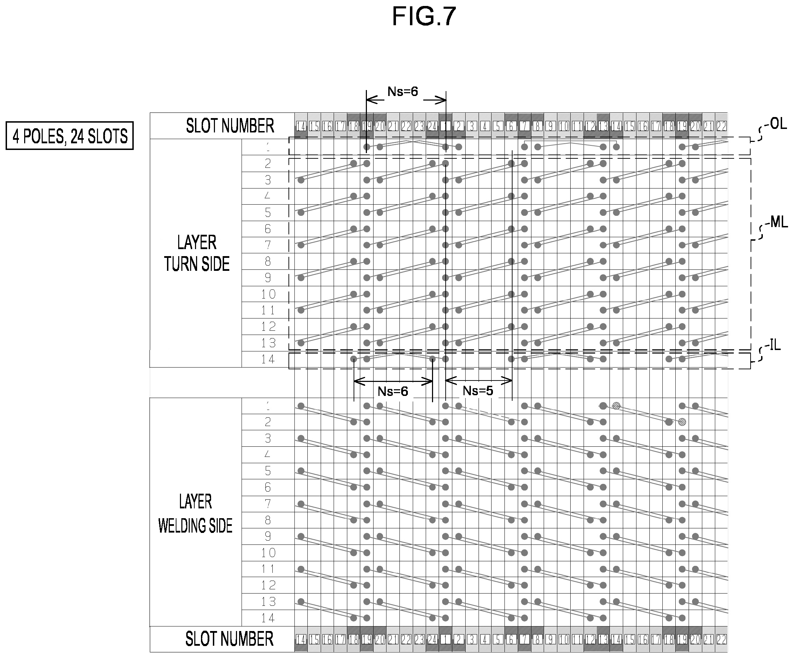

Here, the stator coil 19 in the stator 10 shown in FIG. 1A is routed in accordance with coil wiring shown in FIG. 6 described below. Furthermore, the stator coil 19 in the stator 10 shown in FIG. 1B is routed in accordance with coil wiring shown in FIG. 7 described below.

The stator core 12 is formed in the shape of an open cylinder as a result of numerous electromagnetic steel sheets being stacked. The stator core 12 has a yoke 14, numerous teeth 16, and a plurality of slots 18. The numerous teeth 16 and the plural slots 18 are alternately formed in the circumferential direction on the inner peripheral side of the stator core 12. The plural slots 18 open to both sides in the axial direction and inward in the radial direction.

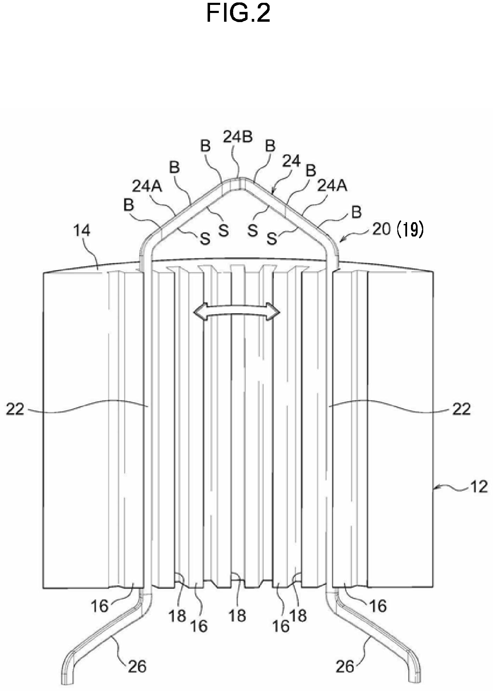

As shown in FIG. 2, the stator coil 19 is configured to include a plurality of segment coils 20. The segment coils 20 are each configured by a flat wire with a rectangular cross section comprising copper, for example, and formed substantially in a U-shape. The segment coils 20 each have a pair of slot insertion portions 22 that extend parallel to each other, a coil end portion 24 that interconnects one end portions of the pair of slot insertion portions 22, and a pair of lead portions 26 that extend from other end portions of the pair of slot insertion portions 22. The segment coils 20 are covered with an insulating film except for the leading end portions of the pair of lead portions 26. The coil end portion 24 is an example of an "interconnecting portion" pertaining to the technology of this disclosure. The pair of slot insertion portions 22 are an example of a "pair of insertion portions" pertaining to the technology of this disclosure.

The pair of slot insertion portions 22 are inserted from one side in the axial direction side into different slots 18 spaced apart from each other in the circumferential direction of the stator core 12. The coil end portion 24 is disposed outside the slots 18 on the one side in the axial direction of the stator core 12 and interconnects the one end portions of the pair of slot insertion portions 22 in the circumferential direction. As shown in FIG. 1A and FIG. 1B, the numerous segment coils 20 are stacked in multiple layers in the radial direction of the stator core 12 and aligned in an annular shape. The pair of lead portions 26 of each of the segment coils 20 project from the end face of the stator core 12 on the other side in the axial direction. These lead portions 26 are twisted and joined to the lead portions 26 of other segment coils 20.

In the following description, the side of the stator core 12 on which the coil end portions 24 of the segment coils 20 are positioned will be called a turn side, and the side of the stator core 12 on which the lead portions 26 of the segment coils 20 are positioned will be called a welding side. It will be noted that the method of joining the lead portions 26 together is not limited to welding, and other joining means (e.g., ultrasonic welding, friction welding, mechanical fastening) may of course be used.

The segment coils 20 have what is called a wave winding in which they are wound continuously all the way around the stator core 12. In other words, the segment coils 20 are routed by wave winding along the circumferential direction of the stator core 12, and the segment coils 20 are electrically connected to each other to form the stator coil 19.

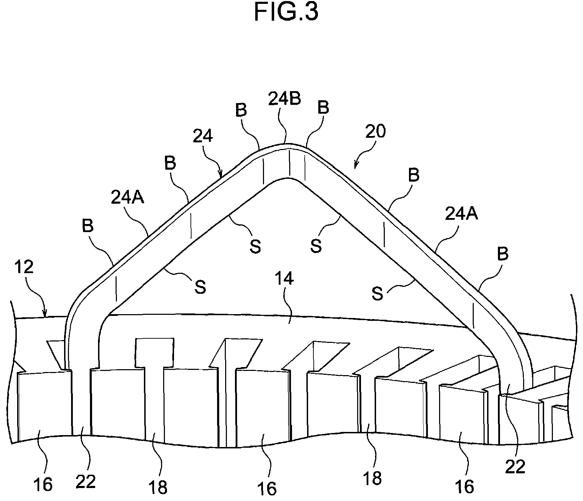

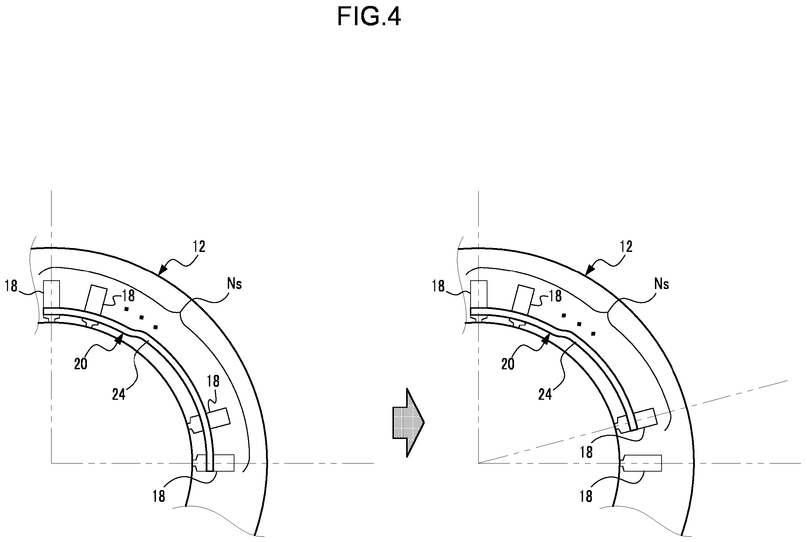

As shown in FIG. 3, the coil end portion 24 of each of the segment coils 20 is formed substantially in a V-shape or substantially in a U-shape when viewed in the radial direction. When viewed in the axial direction as shown in FIG. 4, the coil end portion 24 is curved like a bow along the circumferential direction. The coil end portion 24 has two curved portions 24A that extend along the circumferential direction when viewed in the axial direction and a crank portion 24B that is provided between and interconnects the two curved portions 24A. The crank portion 24B is bent in a crank shape so as to stagger the two curved portions 24A in the radial direction. The two curved portions 24A are disposed staggered from each other in the radial direction by about the thickness of the flat wire.

As shown in FIG. 1A and FIG. 1B, the numerous segment coils 20 form a single layer as a result of the slot insertion portions 22 being sequentially inserted into each of the slots 18 of the stator core 12 while moving one slot 18 at a time in the circumferential direction to complete one revolution. In this embodiment, three layers of the segment coils 20 are formed. Additionally, the circumferential direction length of the segment coils 20 in each layer differs slightly depending on the position of each layer in the radial direction.

In this connection, in relation to regarding rotating electrical machines, there is a demand for rotating electrical machines with various output ranges. Particularly in the development of low-output rotating electrical machines for small automobiles and the like, downsizing the stator core 12 is being considered. In this case, the number of slots in the stator core 12 may be reduced (e.g., to 4 poles and 24 slots). In the case of a small rotating electrical machine, when the segment coils 20 are inserted into the slots, the central angle of the coil end portions 24 of the segment coils 20 becomes relatively large, and the rigidity of the curved portions 24A of the coil end portions 24 is reduced (i.e., they tend to become plastically deformed), so it is difficult to insert the segment coils 20 via the coil end portions 24.

FIG. 4 is a conceptual diagram for describing the curved shape of the coil end portions 24. Here, for convenience of description, one segment coil 20 is shown inserted into two slots 18 spaced apart from each other in the circumferential direction of the stator core 12, but in reality, a plurality of segment coils are inserted into the corresponding slots 18. As shown on the left side of FIG. 4, if the segment coil 20 is relatively long in the stator core 12 and the slots 18 into which the segment coil 20 is inserted are disposed 90 degrees or more apart from each other, the rigidity of the curved portions 24A of the coil end portion 24 is reduced, making it difficult to insert the segment coil 20. By contrast, the present inventors found after diligent consideration that insertion becomes easier when, as shown on the right side of FIG. 4, the angle between the slots 18 into which the segment coil 20 is inserted is smaller than 90 degrees (e.g., 75 degrees).

Thus, in the stator coil 19 pertaining to this embodiment, a slot pitch Ns and a total number of slots S on the turn side have the following relational expression (1).

$$Ns < S/4 \cdots (1)$$

Here, the slots 18 are evenly arranged along the circumferential direction of the stator core 12. Thus, by dividing the total number of slots S by 4, a number of slots arranged every 90 degrees is obtained. Furthermore, the slot pitch Ns is the number of the slots 18 that the segment coil 20 straddles. That is, it is the number of the slots 18 from the slot 18 next to the slot 18 into which one of the pair of slot insertion portions 22 of the segment coil 20 is inserted to the slot 18 into which the other is inserted. Consequently, as indicated by the above relational expression (1), by setting the slot pitch Ns smaller than a value obtained by dividing the total number of slots S by 4, a reduction in the rigidity of the curved portions 24A of the coil end portions 24 of the segment coils 20 is inhibited.

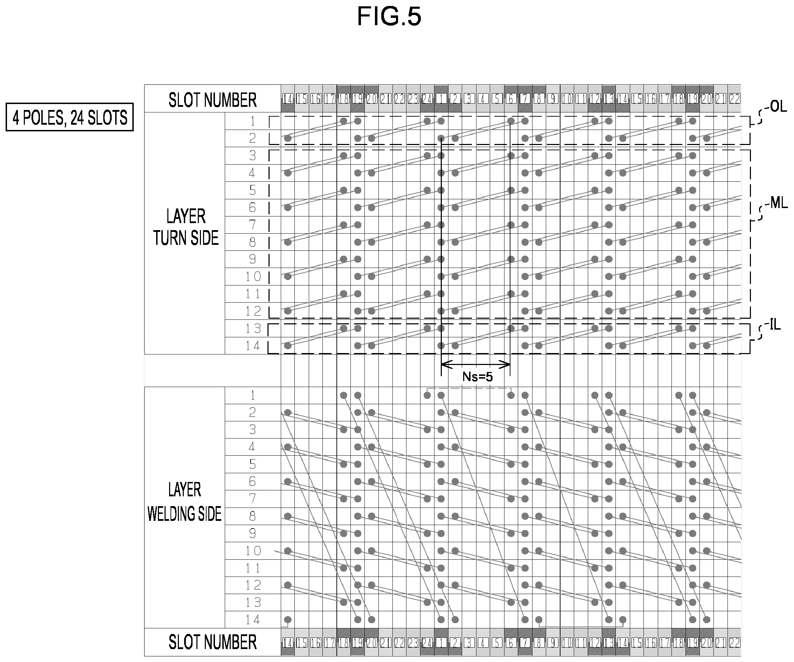

As shown in FIG. 5, in the stator coil 19 pertaining to this embodiment, the number of magnetic poles P of the rotor is equal to 4, and the total number of slots S is equal to 24 (i.e., 4 poles and 24 slots). In FIG. 5, only the wiring of the segment coils 20 corresponding to one phase (e.g., the U-phase) of the three-phase alternating current flowing through the stator coil 19 is shown.

Additionally, the slot pitch Ns is set equal to 5. As an example, the same segment coil 20 is inserted into the slot of slot number 1 of layer no. 2 of the middle layer ML and into the slot of slot number 6 of the outermost layer OL on the turn side. That is, there are five of the slots 18 from slot number 2, which comes after slot number 1 into which the segment coil 20 is inserted, to slot number 6 into which the same segment coil 20 is inserted.

In the stator coil 19 pertaining to this embodiment, the slot pitches Ns are all equal to 5 in the outermost layer OL on the turn side, the innermost layer IL on the turn side, and the middle layer between the outermost layer OL and the innermost layer IL on the turn side. Additionally, slot pitch Ns = 5 < S/4 (= 24/4 = 6) is satisfied.

Here, the outermost layer OL is a group of the segment coils 20 (i.e., a segment coil group) disposed on the outermost side in the radial direction in the plural slots 18 that the stator core 12 has. Furthermore, the innermost layer IL is a group of the segment coils 20 disposed on the innermost side in the radial direction in the plural slots 18 that the stator core 12 has. Moreover, the middle layer ML is a group of the segment coils 20 disposed between the outermost layer OL and the innermost layer IL.

In this way, in the stator coil 19 pertaining to this embodiment, the slot pitch Ns is set, and the segment coils 20 are routed, to satisfy the above relational expression (1).

(Action and Effects)

As described above, in the stator core 12 pertaining to this embodiment, by setting the slot pitch Ns to satisfy the above relational expression (1), deformation of the coil end portions 24 of the segment coils 20 is inhibited, and the work of inserting the segment coils 20 into the stator core 12 becomes easier. As a result, the productivity of the stator core 12 is improved.

There is a growing demand for combinations of slot numbers and magnetic pole numbers that can be applied to small rotating electrical machines, such as a combination of 4 poles and 24 slots, for low-output applications for kei cars and small motor vehicles, for example. However, when the number of slots is reduced, the coil end portions 24 of the segment coils 20 become relatively long with respect to the slot pitch Ns. Compared with, for example, combinations of magnetic pole numbers and slot numbers that are seen in conventional high-output applications, such as 8 poles and 48 slots or 12 poles and 72 slots, the number of slots is reduced, so the coil end portions 24 become relatively long. For that reason, when the segment coils 20 are inserted into the slots 18, the coil end portions 24 become greatly deformed in bowed shapes along the circumferential direction, making it difficult to insert the segment coils 20 into the slots 18. As a result, the productivity of the stator core 12 has sometimes ended up being reduced. In the present configuration, as described above, the slot pitch Ns is set in a predetermined relationship relative to the total number of slots, so deformation of the coil end portions 24 is inhibited, and the work of inserting the segment coil 20 becomes easier. For example, even if the number of slots in a stator core using segment coils is reduced, the work of inserting the segment coils 20 becomes easier, so the productivity of the stator core 12 is improved.

Furthermore, in the stator core 12 pertaining to this embodiment, the number of magnetic poles is set to 4. Usually in the case of a rotor where the number of magnetic poles is four or less, the above problem is particularly likely to occur in the stator core 12 corresponding thereto. In the present configuration, as described above, the slot pitch Ns is set in a predetermined relationship relative to the total number of slots, so even in the stator core 12 corresponding to a rotor where the number of magnetic poles is set to 4, deformation of the coil end portions 24 is inhibited, and the work of inserting the segment coils 20 becomes easier.

Furthermore, in the stator core 12 pertaining to this embodiment, the total number of slots is 24. Usually in the case of the stator core 12 where the total number of slots is set to 24, the above problem is particularly likely to occur. In the present configuration, as described above, the slot pitch Ns is set in a predetermined relationship relative to the total number of slots, so even in the stator core 12 corresponding to a rotor where the number of magnetic poles is set to 4, deformation of the coil end portions 24 is inhibited, and the work of inserting the segment coils 20 becomes easier.

It will be noted that although in the above embodiment an example was described in which the number of magnetic poles in the rotor is 4, the technology of this disclosure is not limited thereto. The number of magnetic poles P need only be equal to or less than four, and, for example, the number of magnetic poles P may also be equal to 2.

(Example Modification 1)

Furthermore, as shown in FIG. 6, in another wiring example of the stator core 12 pertaining to this embodiment, the slot pitch Ns is set to equal to 5 in 4 poles and 24 slots. As an example, the same segment coil 20 is inserted into the slot of slot number 1 in layer no. 3 and into the slot of slot number 6 in layer no. 2 of the middle layer ML on the turn side. Additionally, slot pitch Ns = 5 < S/4 (= 24/4 = 6) is satisfied.

Furthermore, as an example, the same segment coil 20 is inserted into the slot of slot number 2 and the slot of slot number 7 of the outermost layer OL on the turn side. Additionally, slot pitch Ns = 5 < S/4 (= 24/4 = 6) is satisfied.

Furthermore, as an example, the same segment coil 20 is inserted into the slot of slot number 1 and the slot of slot number 6 of the innermost layer IL on the turn side. Additionally, slot pitch Ns = 5 < S/4 (= 24/4 = 6) is satisfied.

In this way, also in the stator coil 19 pertaining to this example modification, the slot pitches Ns are all equal to 5 in the outermost layer OL on the turn side, the innermost layer IL on the turn side, and the middle layer between the outermost layer OL and the innermost layer IL on the turn side. Additionally, slot pitch Ns = 5 < S/4 (= 24/4 = 6) is satisfied. Because of this, the same effects as those of the above embodiment are also obtained in the stator core 12 pertaining to this example modification.

(Example Modification 2)

It will be noted that although in the above embodiment an example was described in which the slot pitch Ns satisfies the above relational expression (1) in all of the outermost layer OL on the turn side, the innermost layer IL on the turn side, and the middle layer ML between the outermost layer OL and the innermost layer IL on the turn side, the technology of this disclosure is not limited thereto.

As an example, as shown in FIG. 7, in this example modification, the above relational expression (1) is satisfied in the middle layer ML on the turn side. In the example shown in FIG. 6, the slot pitch Ns of the middle layer ML is set equal to 5. As an example, the same segment coil 20 is inserted into the slot of slot number 1 of layer no. 3 and the slot of slot number 6 of layer no. 2 of the middle layer ML on the turn side.

By contrast, the slot pitch Ns of the outermost layer OL and the innermost layer IL is set equal to 6, which does not satisfy the above relational expression (1). In other words, only the slot pitch Ns in the middle layer ML satisfies the above relational expression (1).

As described above, in this example modification, by setting the slot pitch Ns in the middle layer ML to satisfy the above relational expression (1), deformation of the coil end portions 24 of the segment coils 20 is inhibited, and the work of inserting the segment coil 20 into the stator core 12 becomes easier. As a result, the productivity of the stator core 12 is improved.

Usually, when inserting the segment coils 20 into the slots 18 in the middle layer ML of the stator core 12, it is particularly easy for the above problem to occur. In the present configuration, as described above, the slot pitch Ns in the middle layer ML is set to satisfy the above relational expression (1), so the work of inserting the segment coils becomes easier.

It will be noted that although in this embodiment the segment coils 20 are configured by flat wires comprising metal wires with rectangular cross sections, they are not limited thereto, and the stator coil 19 may be configured by flat wires with rectangular cross sections comprising multiple strands. Furthermore, although in this embodiment the stator core 12 is configured by stacked steel sheets, it is not limited thereto, and at least part of the stator core 12 may be configured by a powder magnetic core.

Furthermore, in this embodiment, the stator coil 19 may have what is called a wave winding in which it is wound continuously all the way around the stator core 12.

The content of the above description and the content shown in the drawings are a detailed description of parts pertaining to the technology of this disclosure and are merely one example of the technology of this disclosure. For example, descriptions above relating to configurations, functions, actions, and effects are descriptions relating to one example of configurations, functions, actions, and effects of parts pertaining to the technology of this disclosure. Thus, it goes without saying that unnecessary parts may be deleted from, new elements may be added to, and substitutions may be made to the content of the above description and the content shown in the drawings without departing from the spirit of the technology of this disclosure. Furthermore, in order to avoid complexity and facilitate understanding of parts pertaining to the technology of this disclosure, in the content of the above description and the content shown in the drawings, description relating to common technical knowledge that does not particularly require description to enable implementation of the technology of this disclosure is omitted.

All documents, patent applications, and technical standards mentioned in this specification are incorporated herein by reference to the same extent as if each individual document, patent application, or technical standard were specifically and individually indicated to be incorporated by reference.

Furthermore, the disclosure of Japanese Patent Application No. 2023-124989, filed on July 31, 2023, is incorporated in its entirety by reference herein.

**Claims**

1. A stator for a rotating electrical machine, the stator comprising:

   a stator core having a plurality of slots; and
   a stator coil formed by segment coils, which are respectively configured using a flat wire with a rectangular cross section and inserted into different slots spaced apart from each other in a circumferential direction of the stator core, and each of which has a pair of insertion portions that are respectively inserted into the different slots and a coupling portion that couples together the pair of insertion portions,
   wherein, when Ns denotes a slot pitch, which is a pitch of the slots into which the pair of the insertion portions of the segment coils are inserted, and S denotes a total number of slots in the stator core, the following relational expression (1) is satisfied:

$$(1): Ns < S/4.$$

2. The stator for a rotating electrical machine of claim 1, wherein the slot pitch is the slot pitch in a middle layer between an outermost layer and an innermost layer of the stator core.

3. The stator for a rotating electrical machine of claim 1, wherein, when P denotes a number of magnetic poles of a rotor that rotates relative to the stator, P $\leq$ 4.

4. The stator for a rotating electrical machine of claim 1, wherein, in the stator core, a total number of the slots S = 24.

# FIG.1A

# FIG.1B

# FIG.2

# FIG.3

FIG.4

FIG.5

4 POLES, 24 SLOTS

EP 4 757 128 A1

# FIG.6

4 POLES, 24 SLOTS

EP 4 757 128 A1

13

# FIG.7

4 POLES, 24 SLOTS

EP 4 757 128 A1

14

# EP 4 757 128 A1

| INTERNATIONAL SEARCH REPORT | International application No. |
|---|---|
| | PCT/JP2024/027218 |

**A. CLASSIFICATION OF SUBJECT MATTER**

*H02K 3/04*(2006.01)i; *H02K 3/28*(2006.01)i
FI: H02K3/04 E; H02K3/28 N

According to International Patent Classification (IPC) or to both national classification and IPC

**B. FIELDS SEARCHED**

Minimum documentation searched (classification system followed by classification symbols)

H02K3/04; H02K3/28

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2015/107679 A1 (MITSUBISHI ELECTRIC CORPORATION) 23 July 2015 (2015-07-23) | 1-2 |
| | paragraphs [0013]-[0052], [0083]-[0084], fig. 1-13 | |
| Y | paragraphs [0013]-[0052], [0083]-[0084], fig. 1-13 | 3-4 |
| Y | JP 2017-034806 A (KOMATSU LTD.) 09 February 2017 (2017-02-09) paragraph [0084], fig. 1-4 | 3-4 |
| A | JP 2014-096986 A (KABUSHIKI KAISHA TOYOTA JIDOSHOKKI) 22 May 2014 (2014-05-22) paragraphs [0017]-[0063], fig. 1-9 | 1-4 |
| A | JP 2011-004545 A (MITSUBISHI ELECTRIC CORPORATION) 06 January 2011 (2011-01-06) paragraphs [0014]-[0094], fig. 1-8 | 1-4 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 October 2024** | **15 October 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/027218**

| Patent document cited in search report | | | Publication date (day/month/year) | Patent family member(s) | | | Publication date (day/month/year) |
|---|---|---|---|---|---|---|---|
| WO | 2015/107679 | A1 | 23 July 2015 | US | 2016/0322876 | A1 | |
| | | | | paragraphs [0030]-[0069], [0105]-[0106], fig. 1-13 | | | |
| | | | | EP | 3096441 | A1 | |
| | | | | CN | 105917555 | A | |
| JP | 2017-034806 | A | 09 February 2017 | (Family: none) | | | |
| JP | 2014-096986 | A | 22 May 2014 | (Family: none) | | | |
| JP | 2011-004545 | A | 06 January 2011 | US | 2010/0320863 | A1 | |
| | | | | paragraphs [0026]-[0146], fig. 1-8 | | | |
| | | | | DE | 102009055877 | A1 | |
| | | | | FR | 2947115 | A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6513831 B

- JP 2023124989 A